# EUROPEAN PATENT APPLICATION

(11) **EP 4 019 135 A1**
(43) Date of publication of application: **29.06.2022**
(21) Application number: 21216120.2
(22) Date of filing: 20.12.2021
(51) Int. Cl.: B01L 3/02, B01L 9/00

(54) **TELESCOPING ELECTRIC PIPETTE CONTROLLER**

(30) Priority: 22.12.2020 CN 202011531102
(71) Applicant: Mettler Toledo (Changzhou) Measurement Technology Ltd., Jiangsu 213125 (CN); Mettler Toledo (Changzhou) Precision Instrument Ltd., Changzhou, Jiangsu 213022 (CN); Mettler-Toledo International Trading (Shanghai) Co., Ltd., Shanghai 200131 (CN)
(72) Inventor: Zhao, Bo, Changzhou (CN); Zhou, Bo, Wuxi (CN)
(74) Representative: Mettler-Toledo

(57) **Abstract**

The present invention provides a telescoping electric pipette controller, which comprises a handle, a head end portion, an outer shell and a manual retainer, wherein one end of the head end portion is arranged in an end portion of the handle in a penetrating manner, the outer shell is sheathed over an outer surface of the end portion of the handle, and one end portion of the manual retainer is rotatably connected to the outer shell; and by means of opening or fastening the manual retainer, one end portion of the manual retainer is released outwards or pressed inwards against the head end portion, allowing extension and retraction of the head end portion relative to the handle. According to the present invention, the extension and retraction and the locking of part of a grip structure are controlled by means of a switch of a mechanical structure, such that the grip can change the length within a specific range as desired, achieving adjustment of the length of the grip as desired.

## Description

### Technical Field

The present invention relates to the field of pipette controllers, and in particular to a telescoping electric pipette controller.

### Background Art

In the prior art, a traditional pipette controller is a product with a single short grip. In recent years, with the diversified usage needs of customers, in some usage scenarios of a customer, when a short-grip pipette controller is used in a test, the customer will take a long time to lift the elbows off the table of a super-clean bench, which is very laborious. Moreover, the traditional pipette controller has a structure that does not conform to ergonomics, so a long-grip pipette controller has emerged.

However, the pipette controller with a single short-grip and the pipette controller with a single long-grip are both applicable to relatively simple scenarios, which cannot fully meet the increasing complicated usage demands of customers.

For users, it is not ideal to equip with both a short-grip pipette controller and a long-grip pipette controller, which has the following problems:
first, the equipment cost is very high;
second, it will be troublesome, time-consuming and laborious to switch equipment during the test, and
third, the more equipment used in the test, the more time and effort required for cleaning and maintenance.

In view of this, those skilled in the art design a telescoping electric pipette controller in order to overcome the foregoing technical problems.

### Summary of invention

The technical problem to be solved by the present invention is to provide a telescoping electric pipette controller in order to overcome the drawback in the prior art that a short-grip pipette controller and a long-grip pipette controller cannot be in common use or switched between each other.

The present invention solves the above technical problem through the following technical solution:
a telescoping electric pipette controller, characterized by comprising a handle, a head end portion, an outer shell and a manual retainer, wherein one end of the head end portion is arranged in an end portion of the handle in a penetrating manner, the outer shell is sheathed over an outer surface of the end portion of the handle, and one end portion of the manual retainer is rotatably connected to the outer shell; and
by means of opening or fastening the manual retainer, one end portion of the manual retainer is released outwards or pressed inwards against the head end portion, selectively allowing extension and retraction of the head end portion relative to the handle.

According to an embodiment of the present invention, the telescoping electric pipette controller further comprises a limiting member, which is mounted between one end portion of the manual retainer and an outer wall face of the head end portion.

According to an embodiment of the present invention, the limiting member is located in the outer shell and close to the outer wall face of the head end portion.

According to an embodiment of the present invention, the outer shell is provided with a mounting through-hole, and one end portion of the manual retainer is rotatably connected in the mounting through-hole by means of a rotation shaft.

According to an embodiment of the present invention, one end portion of the manual retainer is of a cam structure.

According to an embodiment of the present invention, the limiting member is an internal gasket.

According to an embodiment of the present invention, the surface of the internal gasket that faces the head end portion is provided with at least one first limiting portion, and the outer wall face of the head end portion is provided with at least one second limiting portion, with the first limiting portion correspondingly matching the second limiting portion; and
when the first limiting portion corresponds to the second limiting portion, by means of fastening the manual retainer, one end portion of the manual retainer presses the internal gasket inwards, such that the first limiting portion is connected to the second limiting portion, achieving locking between the head end portion and the handle.

According to an embodiment of the present invention, one end portion of the manual retainer is provided with at least one first limiting portion, and the outer wall face of the head end portion is provided with at least one second limiting portion, with the first limiting portion correspondingly matching the second limiting portion; and
when the first limiting portion corresponds to the second limiting portion, by means of fastening the manual retainer, one end portion of the manual retainer presses the head end portion inwards, such that the first limiting portion is connected to the second limiting portion, achieving locking between the head end portion and the handle.

According to an embodiment of the present invention, the first limiting portion is a boss, and the second limiting portion is a recess.

According to an embodiment of the present invention, the outer shell is provided with a mounting portion, the mounting portion is formed by extending outwards along an outer end face of the mounting through-hole, and one end portion of the manual retainer is rotatably connected in the mounting portion by means of the rotation shaft.

The positive improvement effects of the present invention are as follows:
the telescoping electric pipette controller of the present invention controls the extension and retraction and the locking of part of a grip structure by means of a switch of a mechanical structure, such that the grip can change the length as desired within a specific range, achieving adjustment of the length of the grip as desired.

Such a structure can adjust the length of the grip as desired upon according to the customer's preferences and actual needs during the test, such that the customer can keep the elbows against the table of the super-clean bench during various tests so as to complete all the test tasks easily and effortlessly, which greatly improves the comfort of operation of the customer and can meet the customer's increasingly complicated usage needs.

### Brief description of drawings

The above and other features, properties and advantages of the present invention will become clearer based on the description below in conjunction with the accompanying drawings and embodiments, and the same features are always indicated by the same reference numerals in the figures, in which:
- Fig. 1: is a front view of a telescoping electric pipette controller according to the present invention.
- Fig. 2: is a right view of the telescoping electric pipette controller according to the present invention.
- Fig. 3: is a sectional view taken along line A-A in Fig. 2.
- Fig. 4: is an enlarged view of portion B in Fig. 3.

### Description of embodiments

To make the above objects, features and advantages of the present invention more apparent and easier to understand, specific implementations of the present invention are described in detail below with reference to the accompanying drawings.

Embodiments of the present invention will now be described in detail with reference to the accompanying drawings. Reference will now be made in detail to preferred embodiments of the present invention, examples of which are illustrated in the accompanying drawings. The same reference numerals used in all the accompanying drawings denote identical or similar parts wherever possible.

Furthermore, although the terms used in the present invention are selected from well-known common terms, some of the terms mentioned in the description of the present invention may have been selected by the applicant according to his or her determination, and the detailed meaning thereof is described in the relevant section described herein.

Furthermore, the present invention must be understood, not simply by the actual terms used but also by the meanings encompassed by each term.

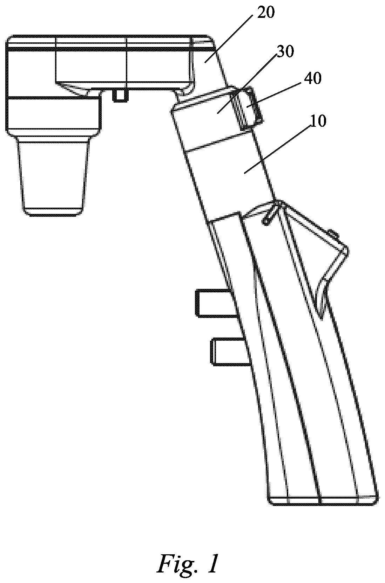

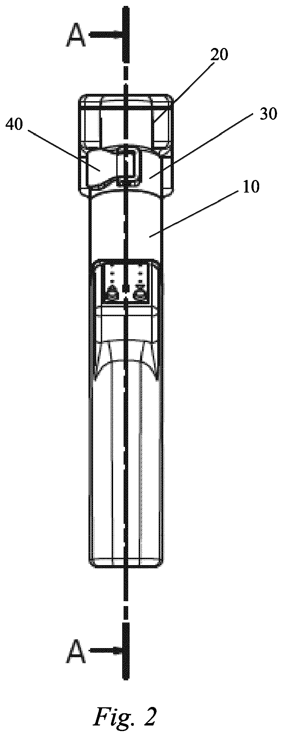

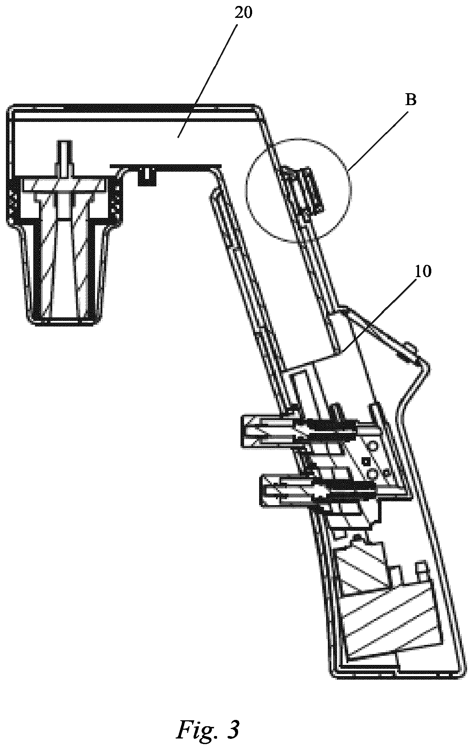

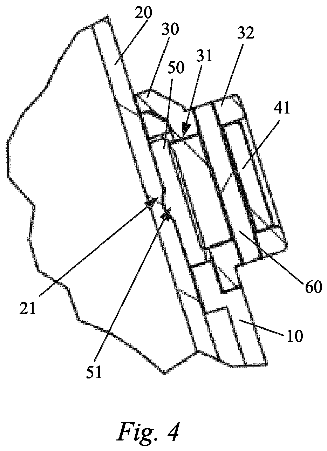

Fig. 1 is a front view of a telescoping electric pipette controller according to the present invention. Fig. 2 is a right view of the telescoping electric pipette controller according to the present invention. Fig. 3 is a sectional view taken along line A-A in Fig. 2. Fig. 4 is an enlarged view of portion B in Fig. 3.

As shown in Figs. 1-4, the present invention discloses a telescoping electric pipette controller, which comprises a handle 10, a head end portion 20, an outer shell 30 and a manual retainer 40. One end of the head end portion 20 is arranged in an end portion of the handle 10 in a penetrating manner, the outer shell 30 is sheathed over an outer surface of the end portion of the handle 10, and one end portion of the manual retainer 40 is rotatably connected to the outer shell 30. By means of opening or fastening the manual retainer 40, one end portion 41 of the manual retainer 40 is released outwards or pressed inwards against the head end portion 20, in an opened position allowing extension and retraction of the head end portion 20 relative to the handle 10.

Preferably, the telescoping electric pipette controller further comprises a limiting member 50, and the limiting member 50 is mounted between one end portion of the manual retainer 40 and an outer wall face of the head end portion 20. The limiting member 50 is preferably located in the outer shell 30 and close to the outer wall face of the head end portion 20.

Further, the outer shell 30 is provided with a mounting through-hole 31, and one end portion 41 of the manual retainer 40 is rotatably connected in the mounting through-hole 31 by means of the rotation shaft 60.

Of course, the outer shell 30 can be further provided with a mounting portion 32, the mounting portion 32 is formed by extending outwards along an outer end face of the mounting through-hole 31, and one end portion 41 of the manual retainer 40 is rotatably connected in the mounting portion 32 by means of the rotation shaft 60.

Preferably, the limiting member 50 can be an internal gasket. The surface of the internal gasket that faces the head end portion 20 is provided with at least one first limiting portion 51, the outer wall face of the head end portion 20 is provided with at least one second limiting portion 21, and the first limiting portion 51 correspondingly matches the second limiting portion 21.

As such, when the first limiting portion 51 corresponds to the second limiting portion 21, by means of fastening the manual retainer 40, one end portion of the manual retainer 40 presses the internal gasket inwards, such that the first limiting portion 51 is connected to the second limiting portion 21, achieving locking between the head end portion 20 and the handle 10.

Alternatively, similarly, one end portion of the manual retainer 40 can be provided with at least one first limiting portion, and the outer wall face of the head end portion 20 is provided with at least one second limiting portion, with the first limiting portion correspondingly matching the second limiting portion (not shown in the figure).

As such, when the first limiting portion corresponds to the second limiting portion, by means of fastening the manual retainer 40, one end portion of the manual retainer 40 presses the head end portion 20 inwards, such that the first limiting portion is connected to the second limiting portion, achieving locking between the head end portion 20 and the handle 10.

Here, the first limiting portion 51 is preferably a boss, and the second limiting portion 21 is preferably a recess, with cooperation of the two increasing the force so as to achieve better positioning and enhance the clamping force.

In addition, one end portion 41 of the manual retainer 40 is preferably of a cam structure, there is a clearance between the internal gasket and the cam structure to form a clearance fit, such that by means of the cam structure, the head end portion 20 will not fall down when the internal gasket is released.

According to the above structural description, according to the telescoping electric pipette controller of the present invention, the manual retainer, the handle and the outer shell are combined as a structure that adjusts extension and retraction of the head end portion and the handle, and by means of opening or fastening the manual retainer, the head end portion is released or pressed, thereby selectively allowing the extension or retraction of the head end portion relative to the handle. The present invention mainly has the following features.
I. By means of opening or closing the manual retainer to fix the head end portion, the head end portion can perform extension and retraction.
II. The manual retainer can only rotate by means of the rotation shaft, and the head end portion is directly or indirectly pressed during rotation such that the head end portion is fixed or released.
III. There is a recess and boss structure between the manual retainer and the head end portion, and one or more recesses and bosses can be provided for enhancing the locking strength.

The telescoping electric pipette controller of the present invention controls the extension and retraction and the locking of part of a grip structure by means of a switch of a mechanical structure, such that the grip can change the length as desired within a specific range, achieving adjustment of the length of the grip as desired.

Such a structure can adjust the length of the grip as desired upon according to the customer's preferences and actual needs during the test, such that the customer can keep the elbows against the table of the super-clean bench during various tests so as to complete all the test tasks easily and effortlessly, which greatly improves the comfort of operation of the customer and can meet the customer's increasingly complicated usage needs.

While the specific embodiments of the present invention have been described above, those skilled in the art would have understood that these are illustrative only and that the scope of protection of the present invention is defined by the appended claims. Those skilled in the art would have been able to make various changes or modifications to these embodiments without departing from the principles and essence of the present invention, but all these changes and modifications fall within the scope of protection of the present invention.

### Reference signs list

| | |
|---|---|
| Handle | 10 |
| Head end portion | 20 |
| Outer shell | 30 |
| Manual retainer | 40 |
| One end portion of the manual retainer | 41 |
| Limiting member | 50 |
| Mounting through-hole | 31 |
| Rotation shaft | 60 |
| Mounting portion | 32 |
| First limiting portion | 51 |
| Second limiting portion | 21 |

## Claims

1. A telescoping electric pipette controller, **characterized by** comprising a handle (10), a head end portion (20), an outer shell (30) and a manual retainer (40), wherein one end of the head end portion (20) is arranged in an end portion of the handle (10) in a penetrating manner, the outer shell (30) is sheathed over an outer surface of the end portion of the handle (10), and one end portion of the manual retainer (40) is rotatably connected to the outer shell (30); and by means of opening or fastening the manual retainer (40), one end portion of the manual retainer (40) is released outwards or pressed inwards against the head end portion (20), allowing extension and retraction of the head end portion (20) relative to the handle (10) when the manual retainer (40) is opened.

2. The telescoping electric pipette controller according to claim 1, **characterized by** further comprising a limiting member (50), which is mounted between one end portion of the manual retainer (40) and an outer wall face of the head end portion (20).

3. The telescoping electric pipette controller according to any of the proceeding claims, **characterized in that** the limiting member (50) is located in the outer shell (30) and close to the outer wall face of the head end portion (20).

4. The telescoping electric pipette controller according to any of the proceeding claims, **characterized in that** the outer shell (30) is provided with a mounting through-hole (31), and one end portion of the manual retainer (40) is rotatably connected in the mounting through-hole (31) by means of a rotation shaft (60).

5. The telescoping electric pipette controller according to any of the proceeding claims, **characterized in that** one end portion of the manual retainer (40) is of a cam structure.

6. The telescoping electric pipette controller according to any of the proceeding claims, **characterized in that** the limiting member (50) is an internal gasket.

7. The telescoping electric pipette controller according to any of the proceeding claims, **characterized in that** the surface of the internal gasket that faces the head end portion (20) is provided with at least one first limiting portion (51), and the outer wall face of the head end portion (20) is provided with at least one second limiting portion (21), with the first limiting portion (51) correspondingly matching the second limiting portion (21); and when the first limiting portion (51) corresponds to the second limiting portion (21), by means of fastening the manual retainer (40), one end portion of the manual retainer (40) presses the internal gasket inwards, such that the first limiting portion (51) is connected to the second limiting portion (21), achieving locking between the head end portion (20) and the handle (10).

8. The telescoping electric pipette controller according to any of the proceeding claims, **characterized in that** one end portion of the manual retainer (40) is provided with at least one first limiting portion (51), and the outer wall face of the head end portion (20) is provided with at least one second limiting portion (21), with the first limiting portion (51) correspondingly matching the second limiting portion (21); and when the first limiting portion (51) corresponds to the second limiting portion (21), by means of fastening the manual retainer (40), one end portion of the manual retainer (40) presses the head end portion (20) inwards, such that the first limiting portion (51) is connected to the second limiting portion (21), achieving locking between the head end portion (20) and the handle (10).

9. The telescoping electric pipette controller according to claim 8, **characterized in that** the first limiting portion (51) is a boss, and the second limiting portion (21) is a recess.

10. The telescoping electric pipette controller according to claim 4, **characterized in that** the outer shell (30) is provided with a mounting portion (32), the mounting portion (32) is formed by extending outwards along an outer end face of the mounting through-hole (31) , and one end portion of the manual retainer (41) is rotatably connected in the mounting portion (32) by means of the rotation shaft (60).
